Europäisches Patentamt

(19) European Patent Office

Office européen des brevets

(11) Numéro de publication : **0 150 646**
**B1**

(12) **FASCICULE DE BREVET EUROPÉEN**

(51) Int. Cl.⁴ : **C 02 F 1/52, B 01 D 21/00**

(45) Date de publication du fascicule du brevet :
**27.07.88**

(21) Numéro de dépôt : **84402692.2**

(22) Date de dépôt : **21.12.84**

(54) **Installation pour le traitement par coagulation et floculation de liquides contenant des matières colloïdales et/ou non colloïdales.**

(30) Priorité : **23.12.83 FR 8320649**

(43) Date de publication de la demande :
**07.08.85 Bulletin 85/32**

(45) Mention de la délivrance du brevet :
**27.07.88 Bulletin 88/30**

(84) Etats contractants désignés :
**AT BE CH DE GB IT LI LU NL SE**

(56) Documents cités :
**EP-A- 0 025 068**
**DE-A- 1 936 805**
**DE-C- 577 830**
**FR-A- 2 182 042**
**FR-A- 2 207 867**
**FR-A- 2 304 572**
**FR-A- 2 364 860**
**US-A- 2 179 246**

(73) Titulaire : **Société Anonyme d'Etudes de Recherches et de Productions d'Agents Chimiques - E.R.P.A.C.**
**10, rue Auguste Barbier**
**F-75011 Paris (FR)**

(72) Inventeur : **Treyssac, Georges**
**10, rue Racine**
**F-59700 Marcq en Baroeul (FR)**

(74) Mandataire : **Kedinger, Jean-Paul et al**
**c/o Cabinet Malemont 42, avenue du Président Wilson**
**F-75116 Paris (FR)**

Jouve, 18, rue St-Denis, 75001 Paris, France

## Description

La présente invention a pour objet une installation pour le traitement de liquides tels que des eaux de surface (lac, rivière, ...), contenant des matières colloïdales et/ou non colloïdales, en vue de la séparation de ces dernières, qui comprend une unité de coagulation pourvue d'au moins une arrivée de liquide à traiter et d'un dispositif d'agitation rapide ; une unité de floculation comprenant au moins une cuve de floculation pourvue d'une ouverture d'entrée et d'une ouverture de sortie pour le liquide et de moyens de brassage lent cette cuve et ces moyens de brassage étant du type assurant un écoulement non uniforme du liquide quant à sa vitesse, son débit et sa direction, et lesdits moyens de brassage étant animés d'une vitesse sensiblement égale à la vitesse de brassage optimale déterminée expérimentalement ; et une unité de séparation des flocs formés dans l'unité de floculation ; ces trois unités étant reliées en série dans cet ordre et un moyen d'absorption de l'énergie cinétique du liquide étant disposé sur le trajet du liquide issu de l'unité de coagulation.

Préalablement à la réalisation pratique et à la mise en place d'installations de ce type, on détermine par essais sur un banc de jar-test, les conditions opératoires optimales à mettre en œuvre dans chacune des unités, à savoir notamment la nature des réactifs (de coagulation et de floculation) et leur quantité, le temps de séjour du liquide à traiter dans l'unité de coagulation, la vitesse d'agitation dans cette dernière unité, le temps de séjour dudit liquide dans l'unité de floculation et la vitesse de brassage dans cette dernière unité. A partir des temps de séjour ainsi trouvés et des débits horaires désirés, il est ensuite aisé de calculer le volume des unités considérées. Or, la pratique montre que le temps de séjour réel dans l'unité de floculation dont les caractéristiques ont ainsi été définies, n'atteint très souvent que 20 à 30 % du temps de séjour théorique déterminé par lesdits essais.

La Demanderesse a donc été amenée à étudier les paramètres susceptibles d'être responsables de cette baisse du temps de séjour. Elle a ainsi pu montrer que les facteurs prédominants étaient constitués par la vitesse du liquide à l'entrée de l'unité de floculation et par le mode d'introduction du liquide dans cette unité.

Les essais évoqués ci-dessus montrent en effet que la vitesse de brassage du liquide et partant la vitesse d'écoulement du liquide dans l'unité de floculation ne doit pas dépasser un seuil critique au-delà duquel le regroupement des micro-particules produites dans la phase de coagulation se fait mal et/ou au-delà duquel les flocs formés sont détruits. Dans les installations existantes, le liquide traité dans l'unité de coagulation est envoyé sans aucune précaution particulière dans l'unité de floculation. Or comme dans cette première unité, le liquide et les réactifs de coagulation sont soumis à une agitation très rapide, ils arrivent dans l'unité de floculation dans un état de grande turbulence avec des vitesses locales souvent très supérieures à la vitesse seuil mentionnée précédemment.

Pour pallier cet inconvénient, il a été proposé de disposer, sur le trajet du liquide issu de l'unité de coagulation, un moyen d'absorption de l'énergie cinétique dudit liquide. A ce sujet, on se reportera à US-A-2 179 246, FR-A-2 182 042 FR-A-2 207 867 et FR-A-2 364 860.

Le liquide traversant ce moyen se trouve ralenti et passe d'un régime turbulent à un régime beaucoup plus régulier, ce qui favorise le processus de floculation.

On conçoit par ailleurs que si l'on veut se rapprocher du temps de séjour théorique déterminé expérimentalement comme évoqué précédemment, il est nécessaire de faire la meilleure utilisation possible de tout le volume disponible de l'unité de floculation, unité qui est généralement constituée par au moins une cuve de floculation pourvue d'une ouverture d'entrée et d'une ouverture de sortie et de moyens de brassage lent. Pour ce faire, la Demanderesse a pu montrer qu'il était nécessaire de conférer au liquide issu de l'unité de coagulation, des caractéristiques d'écoulement se rapprochant de celles qui devraient normalement exister à l'entrée de la cuve de floculation qui sont déterminées par le débit du liquide en circulation dans la cuve, de la forme de cette dernière, de la nature des moyens de brassage et de la vitesse conférée par ces moyens au liquide. Ainsi par exemple, si la cuve est sensiblement cylindrique, si l'entrée de cette cuve se trouve à la base de cette dernière et la sortie à la partie supérieure et si les moyens de brassage sont constitués par une herse dont l'axe longitudinal est confondu avec celui de la cuve, cette herse étant animée d'un mouvement régulier de rotation, l'écoulement du liquide dans cette cuve sera du type hélicoïdal ; les caractéristiques d'écoulement à conférer au liquide issu de l'unité de coagulation devront dans ce cas se rapprocher des caractéristiques propres à cet écoulement hélicoïdal au niveau de la zone d'introduction du liquide dans cette cuve cylindrique. Or, dans les installations connues à ce jour, le liquide issu de l'unité de coagulation est introduit dans la cuve de floculation sans qu'il soit attaché une importance particulière aux caractéristiques d'écoulement propres à la cuve de floculation. Il s'ensuit que le liquide à traiter introduit dans cette cuve suit dans cette dernière, une trajectoire souvent très différente de la trajectoire optimale qui permet d'obtenir le temps de séjour désiré.

Ainsi, l'installation selon l'invention est-elle prévue pour supprimer les inconvénients des installations connues et ainsi augmenter le rendement de l'opération de floculation.

Plus précisément, l'installation selon l'invention se caractérise en ce qu'elle comprend en outre, en amont de ladite cuve et sur le trajet du liquide, un moyen de répartition du liquide dont la sortie débouche sur l'ouverture d'entrée de la cuve de floculation, ce moyen de répartition coopérant avec le moyen d'absorption de l'énergie cinétique pour diviser ledit liquide en au moins deux veines élémentaires adjacentes et parallèles de manière telle qu'elles possèdent en pénétrant dans la cuve d'une part, une direction leur permettant de s'écouler de l'ouverture d'entrée à l'ouverture de sortie de la cuve suivant une trajectoire tendant à être parallèle à la paroi ou aux parois latérales de la cuve et d'autre part, des vitesses différentes variant dans le même sens que la distance qu'elles doivent parcourir entre ladite ouverture d'entrée et ladite ouverture de sortie.

En outre, le moyen de répartition coopère avec un moyen de réglage du débit de telle manière que lesdites veines s'écoulent avec des débits différents permettant leur progression de l'ouverture d'entrée à l'ouverture de sortie de la cuve sans interpénétration notable.

Il est à noter ici que le débit d'écoulement, la vitesse d'écoulement et la direction d'écoulement optimal de chaque veine seront fonction non seulement de la nature du liquide à traiter, de la configuration de la cuve de floculation et de la nature des moyens de brassage, mais également de la nature du circuit existant en aval de cette cuve, c'est-à-dire du mode de liaison entre cette dernière et le séparateur et de la conception de ce séparateur. Néanmoins, ce débit, cette vitesse et cette direction d'écoulement optimals pourront être déterminés expérimentalement, les débit, vitesse et direction à retenir pour chaque veine étant ceux répondant aux critères ci-dessus définis qui permettent de se rapprocher le plus possible du temps de séjour théorique du liquide dans la cuve de floculation, conduisant à une floculation optimale, étant entendu que la vitesse de la veine ayant la plus grande distance à parcourir ne dépassera pas la vitesse seuil évoquée précédemment.

Selon un mode de réalisation de l'invention, le moyen de répartition comprend une enceinte pourvue d'une entrée et d'une sortie de liquide et divisée par au moins une cloison de séparation en au moins deux chambres s'étendant de l'entrée à la sortie de ladite enceinte et le moyen d'absorption de l'énergie cinétique est disposé dans ces chambres, le pouvoir d'absorption de ce moyen variant d'une chambre à l'autre pour conférer à chaque veine élémentaire la vitesse d'écoulement désirée.

Les chambres pourront être soit orientées dans la direction à donner aux veines élémentaires, soit dans une direction différente, auquel cas les bords de la sortie des chambres sont prolongées par des plaquettes de direction de manière à définir des chenaux dont les sorties débouchent sur l'ouverture d'entrée de la cuve de floculation, ces chenaux étant orientés dans la direction à donner aux veines élémentaires.

Quant au moyen de réglage de débit, il pourra être constitué par des éléments d'obturation partielle des sorties desdites chambres ou desdits chenaux.

Par ailleurs, dans le cas où les sorties des chambres ou des chenaux ont la même forme et la même section, les sections des éléments d'obturation partielle varient dans le sens inverse de la distance à parcourir par les veines.

Le type d'écoulement dans la cuve de floculation pourra être quelconque et notamment hélicoïdal. Comme indiqué précédemment, l'écoulement sera essentiellement déterminé par la conformation de ladite cuve et la nature des moyens de brassage. Dans le cas d'un écoulement hélicoïdal, et selon un mode de réalisation possible de l'invention, la cuve présente la forme d'un cylindre de révolution, l'ouverture d'entrée de cette cuve s'étend sensiblement horizontalement à la partie basse de la paroi latérale de la cuve sur sensiblement un quart de la circonférence de base, les deux parois latérales de l'enceinte et la ou les cloisons de séparation définissant les chambres sont parallèles entre elles, l'une de ces parois latérales étant tangentielle à la paroi latérale de la cuve et le pouvoir d'absorption du moyen d'absorption de l'énergie cinétique croît d'une chambre à l'autre de ladite paroi tangentielle de l'enceinte à l'autre paroi latérale de cette dernière.

Toujours dans le cas d'un écoulement hélicoïdal et selon un autre mode de réalisation, la cuve présente la forme d'un prisme droit dont la base est un polygone régulier, l'ouverture d'entrée de cette cuve s'étendant sensiblement horizontalement à la partie basse de la paroi latérale de la cuve de manière à couvrir un quart de la circonférence du cercle inscrit dans le polygone régulier constituant la base de la cuve, les deux parois latérales de l'enceinte et la ou les cloisons de séparation définissant les chambres sont parallèles entre elles, l'une de ces parois latérales étant située dans le même plan que l'une des faces de la paroi latérale de la cuve et le pouvoir d'absorption du moyen d'absorption de l'énergie cinétique croît d'une chambre à l'autre de la paroi latérale de l'enceinte située dans le même plan que l'une des faces de la paroi latérale de la cuve à l'autre paroi latérale de l'enceinte.

D'autre part, lorsque dans ces deux modes de réalisation, la ou les cloisons divisent l'enceinte en chambres de mêmes dimensions, la section des éléments d'obturation partielle des sorties de ces chambres ou des chenaux associés à ces dernières, croît d'une chambre à l'autre ou d'un chenal à l'autre, dans le même sens que le pouvoir d'absorption du moyen d'absorption de l'énergie cinétique.

Il est bien certain que dans les installations selon l'invention, l'unité de floculation peut comprendre plusieurs cuves de floculation reliées en série, auquel cas un moyen de répartition peut être disposé avant chacune desdites cuves.

On comprendra par ailleurs que le pouvoir d'absorption du moyen d'absorption de l'énergie cinétique sera avantageusement réglé pour réduire la vitesse du liquide issu de l'unité de coagulation jusqu'à une valeur se rapprochant le plus possible de la vitesse de brassage optimale déterminée expérimentalement.

L'effet de ralentissement recherché pourra être obtenu par tous moyens formant chicanes et notamment par un lit filtrant et/ou un empilement d'éléments solides tels que anneaux Raschig par exemple.

La présente invention sera illustrée ci-après en référence aux dessins annexés dans lesquels :

la figure 1 est une coupe longitudinale schématique des unités de coagulation et de floculation d'une installation selon l'invention, l'écoulement étant sensiblement hélicoïdal dans l'unité de floculation,

la figure 2 est une coupe effectuée suivant la ligne VI-VI de la figure 1, et

les figures 3 et 4 sont des vues agrandies respectivement en perspective et de dessus des moyens assurant la liaison entre les unités de coagulation et de floculation selon la figure 1.

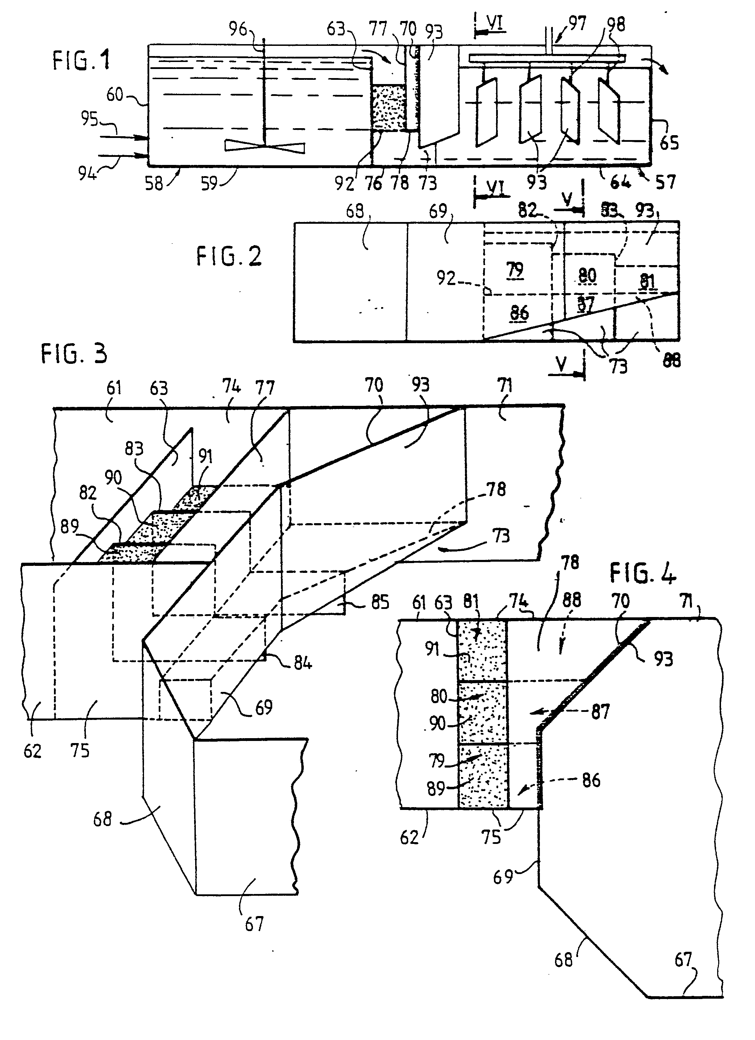

L'installation objet des figures 1 à 4 comprend une cuve de floculation 57 disposée à la suite d'une cuve de coagulation 58. La cuve de coagulation est de forme sensiblement parallélépipédique et comprend un fond horizontal 59, une paroi avant verticale 60, deux parois latérales verticales parallèles 61, 62 de même hauteur que la paroi avant 60 et une paroi arrière verticale 63 moins haute que lesdites parois latérales. Quant à la cuve de floculation 57, elle présente une forme permettant un écoulement hélicoïdal, c'est-à-dire soit la forme d'un cylindre de révolution soit la forme d'un prisme droit dont la base est un polygone régulier comportant au moins six côtés.

Comme le montrent les figures 1 à 4, la cuve 57 présente la forme d'un prisme droit à base sensiblement octogonale. La cuve 57 comprend plus précisément un fond horizontal 64 sensiblement octogonal et une paroi latérale verticale comportant 8 faces latérales 65 à 72, la face latérale arrière 65 étant moins haute que les autres faces latérales. Cette paroi latérale est pourvue à sa base d'une ouverture d'entrée 73 de forme sensiblement rectangulaire et s'étendant horizontalement sur la moitié de la longueur de la face latérale avant 69 et sur toute la longueur de la face latérale 70 adjacente à la face 69. La face latérale 71 est disposée dans l'alignement de la paroi latérale 61 de la cuve 58 et la paroi latérale 62 de cette dernière est pour sa part disposée dans l'alignement du plan vertical perpendiculaire à la face latérale avant 69 de la cuve 57 et passant par le milieu de cette face 69. Les parois latérales 61, 62 et le fond 59 sont prolongés respectivement par des plaques de raccordement 74, 75 76 dans l'alignement respectivement des parois 61, 62 et du fond 59, ces plaques s'étendant jusqu'à la cuve 57 à laquelle elles sont solidarisées. L'enceinte ainsi définie par les plaques de raccordement 74, 75, 76, par la paroi 63 et les faces latérales 69, 70, est divisée par une cloison 77 verticale, parallèle à la paroi 63 s'étendant de la plaque 74 à la plaque 75 et du bord supérieur de ces dernières jusqu'à une certaine distance du fond 76, cette distance étant égale à la hauteur de l'ouverture 73. Par ailleurs, le bord inférieur de cette cloison 77 est relié par une plaquette de direction horizontale 78 au bord inférieur de l'ouverture 73. D'autre part, l'enceinte définie par la paroi arrière 63 de la cuve 58, la cloison 77 et les plaques de raccordement 74, 75, 76 est divisée en trois chambres sensiblement de mêmes dimensions 79, 80, 81, par deux cloisons 82, 83 verticales, s'étendant jusqu'au fond 76 et parallèles entre elles et aux plaques 74, 75 ; la cloison 82 la plus proche de la plaque 75 est moins haute que la paroi 63, la cloison 83 la plus proche de la plaque 74 étant quant à elle moins haute que la cloison 82. Ces cloisons 82, 83 se prolongent à leur base par des plaquettes de direction verticales orientales 84, 85, s'étendant chacune jusqu'à l'ouverture 73 de manière à diviser le volume défini par le fond 76, les plaques 74, 75 et la plaquette horizontale 78 en trois chenaux 86, 87, 88. Dans les chambres 79, 80, 81, sont disposés respectivement des moyens d'absorption de l'énergie cinétique 89, 90, 91 constitués par des lits filtrants ou empilements d'éléments solides tels que des anneaux Raschig s'étendant respectivement du bord supérieur des cloisons 82, 83 jusqu'à une grille horizontale 92 située à hauteur du bord inférieur de la cloison 77. L'ensemble 79, 80, 81, 86, 87, 88 définit ainsi un moyen de répartition du liquide issu de la cuve 58.

L'installation est par ailleurs pourvue d'un moyen de réglage du débit, constitué par des éléments d'obturation aptes à obturer partiellement la sortie des chambres 79, 80, 81 ou, ce qui revient au même, l'ouverture d'entrée 73 de la cuve 57. Ces moyens peuvent par exemple être constitués par une plaque de recouvrement 93 maintenue contre les faces 69, 70 et dont le bord inférieur est découpé judicieusement de manière à obturer progressivement l'ouverture 73 à partir de la face 71. Comme on le voit sur les figures 2 et 3, le bord inférieur de la plaque 93 s'étend de l'extrémité supérieure du côté vertical de l'ouverture 73 qui est délimité par la face 71, jusqu'à l'extrémité inférieure de l'autre côté vertical de l'ouverture 73.

La cuve 58 est complétée par des arrivées 94, 95 respectivement de liquide à traiter et de réactifs de coagulation et de floculation, débouchant dans cette cuve par la paroi avant 60 ; elle comprend en outre un agitateur 96 permettant un mélange énergique de ce liquide et de ces réactifs. Quant à la cuve 57, elle est complétée par un moyen de brassage 97 constitué par une herse à plusieurs branches verticales 98 munies chacune d'une pale 99, par exemple de forme rectangulaire, s'étendant sensiblement sur toute la hauteur de la cuve 57. Cette herse est centrée dans cette dernière et animée d'un mouvement lent de rotation.

Le mélange de la cuve de coagulation, soumis à forte agitation s'écoule, par débordement au-dessus de la paroi 63, dans l'enceinte définie par cette paroi 63, la cloison 77 et les plaques de raccordement 74, 75, 76 où il est réparti dans les chambres 79, 80, 81 en trois veines élémentaires.

Sous l'influence des lits filtrants ou empilements 89, 90, 91, le liquide provenant de la cuve 58 se trouve ralenti et passe en outre d'un régime turbulent à un régime beaucoup plus régulier. Les veines élémentaires créées dans les chambres 79, 80, 81, quittent ensuite ces dernières pour pénétrer respectivement dans les chenaux 86, 87, 88, chacune avec une vitesse sensiblement uniforme et pour finalement déboucher dans la cuve 57 par l'ouverture 73.

On peut admettre très grossièrement que la forme de la cuve 57, la postion de l'ouverture 73, le mode d'évacuation du liquide (évacuation à la partie haute par débordement au-dessus de la face latérale arrière 65) et la structure des moyens de brassage 97, sont du type permettant une circulation hélicoïdale. Bien entendu, cela sera d'autant plus vrai que la forme de la cuve 57 se rapproche de la forme cylindrique. La cuve 57 qui a été représentée avec la forme d'un prisme droit à base octogonale, pourra donc avantageusement être cylindrique.

Si l'on considère donc que la circulation du liquide peut être du type hélicoïdal dans la cuve 57, on peut admettre très grossièrement que le liquide progresse de la partie inférieure à la partie supérieure de cette cuve, sous la forme de veines élémentaires adjacentes qui suivent chacune une trajectoire hélicoïdale, qui sont animées de vitesses décroissant de la veine la plus extérieure à la veine la plus centrale et qui suivent une trajectoire sensiblement parallèle à la paroi latérale de la cuve 57. La distance parcourue par les veines décroît de la veine la plus extérieure à la veine la plus centrale. On notera par ailleurs qu'à épaisseur égale, ces veines considérées entre l'entrée et la sortie de la cuve, auront un volume décroissant de la veine la plus extérieure à la veine la plus centrale ; elles devront donc pénétrer dans la cuve 57 avec des débits décroissants de la veine la plus extérieure à la veine la plus centrale.

On comprendra dans ces conditions que les veines élémentaires produites dans les chambres 79, 80, 81 devront posséder au moment de leur entrée dans la cuve 58, des caractéristiques d'écoulement leur permettant d'évoluer dans la cuve 58 avec des vitesses, débits et directions se rapprochant le plus possible de celles qui viennent d'être définies. En ce qui concerne la vitesse, celle-ci pourra être réglée grâce au moyen d'absorption de l'énergie cinétique ; plus précisément, les hauteurs des lits filtrants ou empilements, et, partant, des cloisons 82, 83, devront être choisies décroissantes de la chambre 79 à la chambre 81. La direction à conférer aux veines prenant naissance dans lesdites chambres sera établie grâce aux plaquettes de direction 84, 85. Quant au débit, il sera réglé par la plaque de recouvrement 93. Par ailleurs, il a été indiqué au début de cette description que la vitesse du liquide ne devait pas dépasser une valeur seuil au-delà de laquelle la floculation se fait mal ou ne se fait pas. Il y aura donc lieu en outre de choisir l'épaisseur des lits filtrants ou des empilements 89, 90, 91 et partant la hauteur des cloisons 82, 83 pour que le liquide provenant de la cuve de coagulation soit suffisamment ralenti pour pénétrer dans la cuve de floculation avec une vitesse égale ou inférieure à cette vitesse seuil. Bien entendu, de la même façon, la herse 97 ne devra pas être animée d'une vitesse angulaire supérieure à cette vitesse seuil.

On peut déterminer sur banc de jar-test, le temps de séjour théorique du liquide dans la cuve de floculation pour que le rendement de floculation soit maximal. Connaissant ce temps de séjour théorique, on peut calculer le volume que devra présenter la cuve de floculation 57 pour un débit d'écoulement donné, en faisant le rapport de ce débit à ce temps de séjour théorique. La cuve 57 ayant le volume ainsi calculé doit donc en principe permettre d'atteindre ledit temps de séjour théorique ou du moins s'en approcher fortement, résultat qui n'est pas obtenu dans les installations connues. Au contraire, les moyens prévus par l'invention, qui conduisent à la meilleure utilisation possible de tout le volume de la cuve de floculation, permettent d'atteindre ce résultat. Dans la pratique, on pourra procéder à une série d'essais en vue de déterminer les vitesses, débit et direction optimals à conférer à chaque veine élémentaire, les vitesse, débit et direction à retenir étant ceux qui conduiront à un temps de séjour du liquide dans la cuve 57 aussi proche que possible du temps de séjour théorique.

Grâce à l'invention, le liquide provenant de la cuve de coagulation pénètre donc dans la cuve de floculation sans turbulences notables (susceptibles d'affecter le processus de floculation) et avec des caractéristiques d'écoulement optimales, le processus de floculation étant de ce fait très performant depuis l'ouverture 73 jusqu'à la sortie de la cuve de floculation. Le mélange de floculation est ensuite évacué de cette dernière cuve, par débordement au-dessus de la paroi 65, après quoi il est traité de manière habituelle dans un séparateur de conception classique, du type à décantation ou à flottation.

### Revendications

1. Installation pour le traitement de liquides tels que des eaux de surface, contenant des matières colloïdales et/ou non colloïdales, en vue de la séparation de ces dernières, qui comprend une unité de coagulation (58) pourvue d'au moins une arrivée de liquide à traiter (94) et d'un dispositif d'agitation rapide (96) ; une unité de floculation comprenant au moins une cuve de floculation (57) pourvue d'une ouverture d'entrée (73) et d'une ouverture de sortie pour le liquide et de moyens de brassage lent (97), cette cuve (57) et ces moyens de brassage (97) étant du type assurant un écoulement non uniforme du liquide quant à sa vitesse, son débit et sa direction, et lesdits moyens de brassage (97) étant animés d'une vitesse sensiblement égale à la vitesse de brassage optimale déterminée expérimentalement ; et une unité de séparation des flocs formés dans l'unité de floculation ; ces trois unités étant reliées en série dans cet ordre et un moyen d'absorption de l'énergie cinétique (89, 90, 91) du liquide étant disposé sur le trajet du liquide issu de l'unité de coagulation, caractérisée en ce qu'elle comprend en outre, en amont de ladite cuve de floculation et sur le trajet du liquide, un moyen de répartition (79, 80, 81, 86, 87, 88) du liquide dont la sortie débouche sur l'ouverture d'entrée (73) de la cuve (57) de floculation, ce moyen de répartition coopérant avec le moyen d'absorption de l'énergie cinétique (89, 90, 91) pour diviser ledit liquide en au moins deux veines élémentaires adjacentes et parallèles de manière telle qu'elles possèdent en pénétrant dans la cuve (57) d'une part, une direction leur permettant de s'écouler de l'ouverture d'entrée (73) à l'ouverture de sortie de la cuve suivant une trajectoire tendant à être parallèle à la paroi ou aux parois latérales (65-72) de la cuve (57) et d'autre part, des vitesses différentes variant dans le même sens que la distance qu'elles doivent parcourir entre ladite ouverture d'entrée (73) et ladite ouverture de sortie.

2. Installation selon la revendication 1, caractérisée en ce que le moyen de répartition coopère avec un moyen de réglage du débit (93) de telle manière que lesdites veines s'écoulent avec des débits différents permettant leur progression de l'ouverture d'entrée (73) à l'ouverture de sortie de la cuve sans interpénétration notable.

3. Installation selon la revendication 1 ou 2, caractérisée en ce que le moyen de répartition comprend une enceinte pourvue d'une entrée et d'une sortie de liquide et divisée par au moins une cloison de séparation (82, 83) en au moins deux chambres (79, 80, 81) s'étendant de l'entrée à la sortie de ladite enceinte, et en ce que le moyen d'absorption de l'énergie cinétique (89, 90, 91) est disposé dans ces chambres, le pouvoir d'absorption de ce moyen variant d'une chambre à l'autre pour conférer à chaque veine élémentaire la vitesse d'écoulement désirée.

4. Installation selon la revendication 3, caractérisée en ce que lesdites chambres sont orientées dans la direction à donner aux veines élémentaires.

5. Installation selon la revendication 3, caractérisée en ce que les bords de la sortie des chambres (79, 80, 81) sont prolongés par des plaquettes de direction (78, 84, 85) de manière à définir des chenaux (86, 87, 88) dont les sorties débouchent sur l'ouverture d'entrée (73) de la cuve (57), ces chenaux étant orientés dans la direction à donner aux veines élémentaires.

6. Installation selon la revendication 3, 4 ou 5, caractérisée en ce que le moyen de réglage du débit est constitué par des éléments d'obturation partielle des sorties des chambres (79, 80, 81) ou des chenaux (86, 87, 88).

7. Installation selon la revendication 6, dans laquelle les sorties des chambres ou des chenaux ont la même forme et la même section, caractérisée en ce que les sections des éléments d'obturation partielle varient dans le sens inverse de la distance à parcourir par les veines élémentaires.

8. Installation selon l'une quelconque des revendications 1 à 7, caractérisée en ce que la cuve de floculation et les moyens de brassage lent sont du type assurant un écoulement hélicoïdal du liquide.

9. Installation selon la revendication 8, dans laquelle la cuve de floculation présente la forme d'un cylindre de révolution, caractérisée en ce que l'ouverture d'entrée de cette cuve s'étend sensiblement horizontalement à la partie basse de la paroi latérale de la cuve sur sensiblement un quart de la circonférence de base, en ce que les deux parois latérales de l'enceinte et la ou les cloisons de séparation définissant les chambres sont parallèles entre elles, l'une de ces parois latérales étant tangentielle à la paroi latérale de la cuve et en ce que le pouvoir d'absorption du moyen d'absorption de l'énergie cinétique croît d'une chambre à l'autre de ladite paroi latérale tangentielle de l'enceinte à l'autre paroi latérale de cette dernière.

10. Installation selon la revendication 8, caractérisée en ce que la cuve (57) a la forme d'un prisme droit dont la base est un polygone régulier, l'ouverture d'entrée (73) de cette cuve (57) s'étendant sensiblement horizontalement à la partie basse de la paroi latérale (65-72) de la cuve de manière à couvrir un quart de la circonférence du cercle inscrit dans le polygone régulier constituant la base de la cuve, en ce que les deux parois latérales (74, 75) de l'enceinte et la ou les cloisons de séparation (82, 83) définissant les chambres sont parallèles entre elles, l'une de ces parois latérales (74) étant située dans le même plan que l'une des faces (71) de la paroi latérale de la cuve et en ce que le pouvoir d'absorption du moyen d'absorption de l'énergie cinétique croît d'une chambre à l'autre de la paroi latérale (74) de l'enceinte située dans le même plan que l'une des faces (71) de la paroi latérale de la cuve à l'autre paroi latérale (75) de l'enceinte.

11. Installation selon la revendication 9 ou 10, caractérisée en ce que la ou les cloisons (82, 83) divisent l'enceinte en chambres de mêmes dimensions (79, 80, 81), la section des éléments d'obturation partielle des sorties de ces chambres ou des chenaux (86, 87, 88) associés à ces chambres croissant d'une chambre à l'autre ou d'un chenal à l'autre dans le même sens que le pouvoir d'absorption du moyen d'absorption de l'énergie cinétique.

12. Installation selon l'une quelconque des revendications précédentes, dans laquelle l'unité de floculation comprend plusieurs cuves de floculation reliées en série, caractérisée en ce qu'un moyen d'absorption de l'énergie cinétique et/ou un moyen de séparation et un moyen de réglage du débit sont disposés avant chacune desdites cuves.

13. Installation selon l'une quelconque des revendications précédentes, caractérisée en ce que le pouvoir d'absorption du moyen d'absorption de l'énergie cinétique est réglé pour réduire la vitesse du liquide issu de l'unité de coagulation jusqu'à une valeur se rapprochant de ladite vitesse de brassage optimale déterminée expérimentalement.

14. Installation selon l'une quelconque des revendications précédentes, caractérisée en ce que le moyen d'absorption de l'énergie cinétique est constitué par des moyens formant chicanes.

15. Installation selon la revendication 14, caractérisée en ce que les moyens formant chicanes sont constitués par un lit filtrant et/ou un empilement d'éléments solides tels que des anneaux Raschig.

## Claims

1. An installation for treating liquids such as surface water, containing colloidal and/or non colloidal matter with a view to separating this latter, which comprises a coagulation unit (58) having at least one inlet (94) for the liquid to be treated and a high speed stirring device (96) ; a flocculation unit comprising at least one flocculation tank (57) having an inlet opening (73) and an outlet opening for the liquid and slow stirring means (97), this tank (57) and the stirring means (97) being of the type providing non uniform flow of the liquid in so far as speed, flow rate and direction are concerned, and said stirring means (97) being driven at a speed substantially equal to the optimum experimentally determined stirring speed ; and a unit for separating the floccules formed in the flocculation unit ; these three units being connected together in series in this order and a means (89, 90, 91) for absorbing the kinetic energy of said liquid being disposed in the path of the liquid coming from the coagulation unit, characterized in that it further comprises, upstream of said flocculation tank and in the path of the liquid, a liquid distribution means (79, 80, 81, 86, 87, 88) whose output opens into the inlet opening (73) of the flocculation tank (57), this distribution means cooperating with the kinetic energy absorption means (89, 90, 91) for dividing said liquid into at least two adjacent and parallel elementary streams so that, when penetrating into the tank (57) they have, on the one hand, a direction allowing them to flow from the inlet opening (73) to the outlet opening of the tank along a path tending to be parallel to the side wall or walls (65-72) of the tank (57) and, on the other hand, different speeds varying in the same sense as the distance which they must travel between said inlet opening (73) and said outlet opening.

2. The installation according to claim 1, characterized in that the distribution means cooperates with a flow rate regulation means (93) so that said streams flow with different flow rates allowing them to travel from the inlet opening (73) to the outlet opening of the tank without appreciable interpenetration.

3. The installation according to claim 1 or 2, characterized in that the distribution means comprises an enclosure having a liquid inlet and a liquid outlet and divided by at least one separating wall (82, 83) into at least two chambers (79, 80, 81) extending from the inlet to the outlet of said enclosure, and in that the kinetic energy absorption means (89, 90, 91) is disposed in these chambers, the absorption power of this means varying from one chamber to the other so as to confer to each elementary stream the desired flow speed.

4. The installation according to claim 3, characterized in that said chambers are orientated in the direction to be given to the elementary streams.

5. The installation according to claim 3, characterized in that the edges of the outlet of the chambers (79, 80, 81) are extended by guide plates (78, 84, 85) so as to define channels (86, 87, 88) whose outlets open into the inlet opening (73) of the tank (57), these channels being orientated in the direction to be given to the elementary streams.

6. The installation according to claim 3, 4 or 5, characterized in that the flow rate regulation means is formed by elements partially closing off the outlets of the chambers (79, 80, 81) or the channels (86, 87, 88).

7. The installation according to claim 6, in which the outlets of the chambers or of the channels have the same shape and the same section, characterized in that the sections of the partially closing elements vary inversely to the distance to be travelled over by the elementary streams.

8. The installation according to any one of claims 1 to 7, characterized in that the flocculation tank and the slow stirring means are of the type providing a helical flow of the liquid.

9. The installation according to claim 8, in which the flocculation tank has the form of a cylinder of revolution, characterized in that the inlet opening of this tank extends substantially horizontally at the low part of the side wall of the tank over substantially a quarter of the base circumference, in that the two side walls of the enclosure and the separating wall or walls defining the chambers are parallel to each other, one of these side walls being tangentiel to the side wall of the tank and in that the absorption power of the kinetic energy absorption means increases from on chamber to the other from said tangential side wall of the enclosure to the other side wall thereof.

10. The installation according to claim 8, characterized in that the tank (57) has the shape of a right prism whose base is a regular polygon, the inlet opening (73) of this tank (57) extending substantially horizontally at the low part of the side wall (65-72) of the tank so as to cover a quarter of the circumference of the circle inscribed in the regular polygon forming the base of the tank, in that the two side walls (74, 75) of the enclosure and the separating wall or walls (82, 83) defining the chambers are parallel to each other, one of these side walls (74) being situated in the same plane as one of the faces (71) of the side wall of the tank and in that the absorption power of the kinetic energy absorption means increases from one chamber to the other from the side wall (74) of the enclosure, situated in the same plane as one of the faces (71) of the side wall of the tank to the other side wall (75) of the enclosure.

11. The installation according to claim 9 or 10, characterized in that the dividing wall or walls (82, 83) divide the enclosure into chambers having the same dimensions (79, 80, 81), the section of the elements partially closing off the outlets of these chambers or channels (86, 87, 88), associated with these chambers increasing from on chamber to the other or from one channel to the other in the same sense as the absorption power of the kinetic energy absorption means.

12. The installation according to any one of the preceding claims, in which the flocculation unit comprises several flocculation tanks connected together in series, characterized in that a kinetic energy absorption means and/or a separation means and a flow rate adjustement means are disposed in front of each of said tanks.

13. The installation according to any one of the preceding claims, characterized in that the absorption power of the kinetic energy absorption means is adjusted so as to reduce the speed of the liquid leaving the coagulation unit to a value approximating said optimum experimentally determined stirring speed.

14. The installation according to any one of the preceding claims, characterized in that the kinetic energy absorption means is formed by means forming baffles.

15. The installation according to claim 14, characterized in that the baffle forming means are formed by a filtering bed and/or a stack of solid elements such as Raschig rings.

**Patentansprüche**

1. Einrichtung zur Behandlung von Flüssigkeiten wie Oberflächenwässer, die kolloidale und/ oder nichtkolloidale Stoffe enthalten, von denen die letzteren abgetrennt werden sollen, wobei die Einrichtung eine Gerinnungseinheit (58) umfaßt, welche mit wenigstens einem Einlaß (94) für die zu behandelnde Flüssigkeit und mit einem Schnellrührwerk (96) versehen ist, sowie eine Ausflockungseinheit, die wenigstens einen mit einer Einlaßöffnung (73) und mit einer Auslaßöffnung für die Flüssigkeit sowie mit Mitteln (97) für eine langsame Durchwirbelung versehenen Ausflockungsbehälter (57) umfaßt, wobei dieser Behälter (57) und die Durchwirbelungsmittel (97) von solcher Art sind, daß eine in bezug auf die Geschwindigkeit, den Durchsatz und die Richtung ungleichmäßige Strömung der Flüssigkeit erhalten wird, und wobei die Durchwirbelungsmittel (97) mit einer Geschwindigkeit im wesentlichen gleich der für eine optimale Durchwirbelung experimentell bestimmten Geschwindigkeit stimuliert sind, und eine Trennungseinheit für die in der Ausflockungseinheit gebildeten Flocken, wobei diese drei Einheiten eine Reihenanordnung in dieser Reihenfolge aufweisen und wobei ein Absorptionsmittel (89, 90, 92) für die kinetische Energie der Flüssigkeit längs des Strömungsweges der Flüssigkeit angeordnet ist und seinen Anfang an der Gerinnungseinheit aufweist, dadurch gekennzeichnet, daß stromaufwärts von dem Ausflockungsbehälter und längs des Strömungsweges der Flüssigkeit noch zusätzlich ein Verteilungsmittel (79, 80, 81, 86, 87, 88) für die Flüssigkeit angeordnet ist, dessen Ausgang an der Einlaßöffnung (73) des Ausflockungsbehälter (57) mündet, wobei dieses Verteilungsmittel mit dem Absorptionsmittel (89, 90, 91) für die kinetische Energie zusammenarbeitet , um die Flüssigkeit in wenigstens zwei benachbarte und zueinander parallele Teilströme derart aufzuteilen, daß sie bei der Strömung durch den Behälter (57) hindurch einerseits eine Ausrichtung erhalten, welche sie von der Einlaßöffnung (73) zu der Auslaßoffnung des Behälters hin längs einer zu der Seitenwand oder den Seitenwänden (65 bis 72) des Behälters (57) parallelen Bahn strömen lässt, und andererseits unterschiedliche Geschwindigkeiten, welche sich gleichsinnig mit der Entfernung verändern, die sie zwischen der Einlaßöffnung (73) und der Auslaßöffnung durchströmen müssen.

2. Einrichtung nach Anspruch 1, dadurch gekennzeichnet, daß das Verteilungsmittel mit einem Durchsatz-Regulierungsmittel (93) derart zusammenwirkt, daß die Teilströme mit unterschiedlichen Durchsätzen strömen, welche ihren Vorschub von der Einlaßöffnung (73) zu der Auslaßöffnung des Behälters ohne eine bemerkenswerte gegenseitige Durchdringung erlauben.

3. Einrichtung nach Anspruch 1 oder 2, dadurch gekennzeichnet, daß das Verteilungsmittel einen mit einem Einlaß und mit einem Auslaß für die Flüssigkeit versehenen umschlossenen Raum umfaßt, der mittels wenigstens einer Trennwand (82, 83) in wenigstens zwei Kammern (79, 80, 81) unterteilt ist, die sich von dem Einlaß zu dem Auslaß des umschlossenen Raumes erstrecken, und daß das Absorptionsmittel (89, 90, 91) für die kinetische Energie in diesen Kammern angeordnet ist, wobei sich die Absorptionskraft dieses Mittels von der einen Kammer auf die andere Kammer verändert, um jeder Teilströmung die gewünschte Strömungsgeschwindigkeit zu erteilen.

4. Einrichtung nach Anspruch 3, dadurch gekennzeichnet, daß die beiden Kammern in der Strömungsrichtung der beiden Teilströme ausgerichtet sind.

5. Einrichtung nach Anspruch 3, dadurch gekennzeichnet, daß die Begrenzungen des Ausgangs der Kammern (79, 80, 81) durch Richtungsplatten (78, 84, 85) derart verlängert sind, daß Rinnen (86, 87, 88) erhalten werden, deren Ausgänge an der Einlaßöffnung (73) des Behälters (57) münden, wobei die Rinnen in der für die Teilströme vorgesehenen Strömungsrichtung ausgerichtet sind.

6. Einrichtung nach einem der Ansprüche 3, 4 oder 5, dadurch gekennzeichnet, daß das Durchsatz-Regulierungsmittel durch Elemente gebildet ist, welche die Ausgänge der Kammern (79, 80, 81) oder der Rinner (86, 87, 88) teilweise behindern.

7. Einrichtung nach Anspruch 6, wobei die Ausgänge der Kammern oder der Rinnen eine gleiche Form und einen gleichen Querschnitt haben, dadurch gekennzeichnet, daß die Querschnitte der eine teilweise Behinderung ergebenden Elemente sich im umgekehrten Verhältnis zu der Entfernung verändern, welche die Teilströme durchströmen müssen.

8. Einrichtung nach einem der Ansprüche 1 bis 7, dadurch gekennzeichnet, daß der Ausflockungsbehälter und die Mittel für eine langsame Durchwirbelung von solcher Art sind, daß eine schraubenförmige Strömung der Flüssigkeit erhalten wird.

9. Einrichtung nach Anspruch 8, bei welcher der Ausflockungsbehälter die Form eines Rotationszylinders aufweist, dadurch gekennzeichnet, , daß sich die Einlaßöffnung des Behälters im wesentlichen horizontal im unteren Bereich der Seitenwand des Behälters über im wesentlichen ein Viertel des Umfangs der Grundfläche erstreckt, daß die beiden Seitenwände des umschlossenen Raumes und die eine oder mehreren Trennwände, welche die Kammern bilden, untereinander parallel verlaufen, wobei die eine dieser Seitenwände tangential zu der Seitenwand des Behälters verläuft, und daß die Absorptionskraft des Absorptionsmittels für die kinetische Energie von der einen Kammer auf die andere Kammer der tangentialen Seitenwand des umschlossenen Raumes hin zu der anderen Seitenwand des letzteren zunimmt.

10. Einrichtung nach Anspruch 8, dadurch gekennzeichnet, daß der Behälter (57) die Form eines geraden Prismas hat, dessen Grundfläche ein regelmäßiges Polygon ist, wobei sich die Einlaßöffnung (73) dieses Behälters (57) im wesentlichen horizontal im unteren Bereich der Seitenwand (65 bis 72) des Behälters in einer Art und Weise erstreckt, daß ein Viertel des Umfangs des Innenkreises an das regelmäßige Polygon der Grundfläche des Behälters bedeckt wird, daß die beiden Seitenwände (74, 75) des umschlossenen Raumes und die eine oder mehreren Trennwände (82, 83), welche die Kammern bilden, untereinander parallel verlaufen, wobei die eine dieser Seitenwände (74) in derselben Ebene angeordnet ist wie die eine Fläche (71) der Seitenwand des Behälters, und daß die Absorptionskraft des Absorptionsmittel für die kinetische Energie von einer Kammer auf die andere Kammer der Seitenwand (74) des umschlossenen Raumes, die in der gleichen Ebene wie die eine Fläche (71) der Seitenwand des Behälters angeordnet ist, hin zu der anderen Seitenwand (75) des umschlossenen Raumes zunimmt.

11. Einrichtung nach Anspruch 9 oder 10, dadurch gekennzeichnet, daß die eine oder die mehreren Trennwände (82, 83) den umschlossenen Raum in Kammern (79, 80, 81) gleicher Abmessungen unterteilen, wobei der Querschnitt der eine teilweise Behinderung der Ausgänge dieser Kammern oder der mit den Kammern verbundenen Rinnen (86, 87, 88) von einer Kammer zu der anderen Kammer hin oder ergebenden Elemente von der einen Rinne zu der anderen Rinne hin in demselben Ausmaß zunimmt wie die Absorptionskraft der Absorptionsmittel für die kinetische Energie.

12. Einrichtung nach einem beliebigen der vorhergehenden Ansprüche, wobei die Ausflockungseinheit mehrere in Reihe angeordnete Ausflockungsbehälter umfaßt, dadurch gekennzeichnet, daß ein Absorptionsmittel für die kinetische Energie und/oder ein Trennmittel und ein Durchsatz-Regulierungsmittel vor jedem dieser Behälter angeordnet sind.

13. Einrichtung nach einem beliebigen der vorhergehenden Ansprüche, dadurch gekennzeichnet, daß die Absorptionskraft des Absorptionsmittels für die kinetische Energie für eine Verringerung der Geschwindigkeit der von der Gerinnungseinheit gelieferten Flüssigkeit bis auf einen Wert geregelt wird, der sich der experimentell ermittelten Geschwindigkeit einer optimalen Durchwirbelung annähert.

14. Einrichtung nach einem beliebigen der vorhergehenden Ansprüche, dadurch gekennzeichnet, daß das Absorptionsmittel für die kinetische Energie mit Schikanemitteln gebildet ist.

15. Einrichtung nach Anspruch 14, dadurch gekennzeichnet, daß die Schikanemitteln mit einem Filtrierbett und/oder mit einem Stapel von Festelementen wie Raschig-Ringen gebildet sind.

FIG.1

FIG.2

FIG. 3

FIG. 4